# EUROPEAN PATENT SPECIFICATION

(11) **EP 2 248 975 B1**
(45) Date of publication and mention of the grant of the patent: **18.07.2012**
(21) Application number: 10004419.7
(22) Date of filing: 27.04.2010
(51) Int. Cl.: E05D 5/02

(54) **Clamping anchor for mounting fittings on a hollow profile of a window or door**
Klemmanker zur Befestigung von Beschlägen an einem Hohlprofil eines Fensters oder einer Tür
Ancrage de serrage pour le montage des ferrures sur un profil creux d'une fenêtre ou porte

(30) Priority: 07.05.2009 BE 200900284
(43) Date of publication of application: 10.11.2010
(73) Proprietor: Van Parys, Remi Emiel, 8790 Waregem (BE)
(72) Inventor: Van Parys, Remi Emiel, 8790 Waregem (BE)
(74) Representative: Donné, Eddy

(56) References cited:
- EP-A- 0 853 178
- DE-A1- 2 317 880

## Description

The present invention concerns a clamping anchor for fixing a fitting on the hollow profile of a window or door, in particular for fixing a hinge on a window or door.

In the case of windows and doors which are composed of hollow profiles made of aluminium or the like, the hinges are presently fixed on a hollow profile by means of bolts which are put through bore holes in a wall of the profile and which are tightened in a fastening element with screw holes positioned opposite the openings in the wall of the profile:

Such a fastening element is formed for example of a plate which is shoved in the cavity of the profile until the screw holes are situated opposite the bore holes in the profile, whereby the plate, while being shoved against the inner side of the above-mentioned wall will be pushed down by means of a leaf spring or the like.

Said mounting requires some time and skill of the mechanic, especially when the hinges must be fixed at a large distance from the far ends of the profile.

Another disadvantage is that the fastening elements and the openings in the profile must be provided beforehand during the assembly of the profiles into a window or door, and that these fastening elements can no longer be replaced after the assembly.

Yet another disadvantage is that such fastening elements are relatively sizeable and consequently take up a lot of storage space, and that the fastening element must be adapted to the inner shape of the profile concerned on which it must be fixed and that, consequently, a relatively large number of different types of said fastening elements exist and should be kept in stock.

Another type of fastening in the form of a clamping system is already known, which can be put in an opening in the wall of a profile of a window or door and which can be secured by means of a moving part with which the clamping system can be clamped behind a roll-in tooth of the profile.

Such a clamping system has a relatively complex construction, as a result of which the cost price is relatively high.

In order to guarantee a stable fastening, such a clamping system must have sufficient counter support on the opposite side of the roll-in tooth, for example on an additional wall of the profile or in a second opening in an opposite wall of the profile, in a bore hole or the like.

As a result, such a clamping system cannot be applied anywhere in any given profile if a stable fastening is required.

In DE 2317880 Al is also described a clamping anchor for fastening a fitting with a double construction. This clamping anchor is formed of two parts mounted loosely together and, with the moving parts in a certain position in relation to one another, it is provided through a hole, after which, with the moving parts in another position in relation to one another, it is shoved in place and fixed. This is disadvantageous in that the hole must be relatively large in relation to the clamped surface.

Moreover, said clamping anchor is necessarily provided with recesses in one of its parts in order to allow the two parts to move in relation to one another, as a result of which the construction is complex and, due to the space occupied by said recesses, the part of the clamping anchor which is visible after the mounting will be large.

The present invention aims to remedy one or several of the above-mentioned and other disadvantages.

To this end, the present invention concerns a clamping anchor for fixing a fitting on the hollow profile of a window or door, **characterised in that** it mainly consists of a hook-shaped or L-shaped body with a first leg and a second leg, whose second leg is provided with an internal screw thread extending in the longitudinal direction of said leg and with a broadened head on the end face of said leg, whereby the clamping anchor has such a shape and dimensions that the body, starting with the first leg, can be put entirely through an opening in a wall of the profile up to the thickened head which is such that it cannot pass through the above-mentioned opening, and whereby the length of the second leg is such that when the body is put in the profile up to the broadened head, the clamping anchor can be hooked with the first leg behind a first inner wall surface of the profile and can then be clamped with the latter thanks to the tensile strength of a bolt which is screwed in the above-mentioned screw thread.

Thanks to its construction, the clamping anchor can be produced in a very simple manner and thus very inexpensively, especially if the clamping anchor is made in one piece.

Moreover, the clamping anchor can be provided in a very simple manner in a bore hole of the profile of a door or window, whereby the screw thread of the clamping anchor can then serve as the screw thread for a bolt with which for example a hinge can be screwed down onto the above-mentioned wall of the profile and whereby said screw then also serves to draw the clamping anchor with the first leg against the inner wall surface of the profile.

This implies time-saving during the assembly.

Moreover, the clamping anchor is very compact, meaning that it requires only little storage room.

An advantage is also that the clamping anchor must not necessarily be provided in the profiles beforehand during the assembly of the window or door frames, and that such clamping anchors according to the invention can also be provided afterwards and can moreover be easily removed or replaced afterwards.

A clamping anchor according to the invention can additionally be provided anywhere in the profile, since every profile has an inner wall surface somewhere behind which the clamping anchor can be hooked, even if it were only the inner wall surface of the wall with the opening to insert the clamping anchor in.

The broadened head makes sure that the clamping anchor cannot fall in the profile while being mounted. Thanks to said broadened head, it is not necessary to already mount the fitting onto the clamping anchor so as to prevent the clamping anchor from falling in the profile.

As a result, the clamping anchor can be made small, namely on the broadened head and in the direction of the first leg, enabling it to tilt some 90 degrees in the opening. This makes it possible to obtain a very large ratio between the clamping surface and the surface of the opening, which is advantageous in that a stronger assembly is obtained with an identical hole, such that the strength of the profile and the visual effect are affected as little as possible.

For the same reason, namely obtaining a maximal angle of tilt, the head is preferably only widened in the direction parallel to the tilting axis during the insertion. A widening in the other direction is kept as small as possible, so that the clamping anchor can be rotated over an angle which is as large as possible during the insertion.

Preferably, a clamping anchor is applied whereby the length of the second leg, in particular the perpendicular distance between the broadened head and the first leg, is equal to or somewhat larger than the perpendicular distance between the above-mentioned first inner wall surface and the outer wall surface of the wall in which the above-mentioned opening is provided, such that the clamping anchor must only be tightened over a very small distance to fix it.

According to a preferred embodiment of a clamping anchor, the exterior angle of the L-shaped or hook-shaped body has a rounded or bent shape which makes it possible for the body of the clamping anchor to be put through the above-mentioned opening in the profile by means of a tilting movement and/or a translation movement.

According to a special characteristic, the end face of the second leg on which the broadened head has been provided is narrowed so as to form a shoulder on the outside of the hook-shaped or L-shaped body, which shoulder is designed to form a stop against a second internal wall surface of the profile or against the fitting, such that a stabler assembly is obtained.

The narrowed end face on the broadened head makes it possible, as soon as the body of the clamping anchor has been provided in the profile, to further slide the clamping anchor laterally in the opening in the wall, such that the screw thread of the clamping anchor can be easily aligned opposite the holes provided in the hinge in order to fix the hinge by means of bolts which are screwed through said holes in the clamping anchor.

Said sliding moreover makes it possible for the above-mentioned shoulder to be positioned under a second internal wall surface, for example under the internal wall surface of the wall in which the above-mentioned opening has been provided.

When the clamping anchor is being clamped, it will not only clamp itself with its first leg against the first internal wall surface, but it will also clamp itself with the above-mentioned shoulder against a second internal wall surface on the other side of the second leg of the clamping anchor, as a result of which the fastening will be stabler.

According to a special characteristic, the second leg can be made telescopically extendible, whereby for example the widened head, together with the narrowed far end of the second leg, forms a separate part which is provided in a sliding manner, together with the narrowed far end, in a guide extending in the second leg according to the longitudinal direction of the second leg, and whereby the separate part is provided for example with a passage for keeping both parts together by means of a screw which has been screwed through the passage in the screw thread of the clamping anchor.

Telescopic in this context chiefly means that there is only a movement in one direction. Thus, the two telescopically connected parts cannot tilt and/or rotate in relation to one another. This is important to obtain a clamping anchor which is as rigid as possible which can be easily mounted in a stable manner and only in the right position, and which is compact.

Such a clamping anchor can be adapted to different profile situations and to different mounting positions of the clamping anchor in a given profile.

According to an alternative embodiment, the broadened head can also be made as a fastening element to fix a hinge or another part of a fitting on a profile, whereby said fastening element is made for example as a sliding piece which can be held in a sliding manner in a guiding groove on the bottom side of the part concerned so as to fix it.

Such an embodiment may be interesting when the hinge has been mounted in a visible or partly visible manner and the fastening screws may not be visible or accessible from the outside for aesthetical or safety reasons.

In order to better explain the characteristics of the invention, the following preferred embodiments of a clamping anchor according to the invention are described by way of example only, with reference to the accompanying drawings, in which:
figure 1 schematically shows a section of an opened door with a hinge which is fixed by means of clamping anchors;
figure 2 shows the part indicated by F2 in figure 1 to a larger scale;
figure 3 shows the clamping anchor according to the invention, indicated by F3 in figure 2, seen in perspective;
figures 4 and 5 show successive steps when mounting a clamping anchor according to the invention;
figure 6 shows a section according to line VI-VI in figure 5;
figure 7 shows a view as that of figure 3, but for an alternative embodiment of a clamping anchor according to the invention;
figure 8 shows the clamping anchor of figure 7 as mounted;
figure 9 shows yet another alternative embodiment of a clamping anchor according to the invention, but as disassembled;
figures 10 and 11 show two sections according to lines X-X and XI-XI respectively;
figures 12 to 14 show successive steps when mounting a clamping anchor according to the invention;
figures 15 and 16 show sections according to line XV-XV in figure 14 and according to line XVI-XVI in figure 15 respectively;
figures 17 and 18 illustrate a hinge being mounted by means of a clamping anchor according to figure 9;
figure 19 shows another alternative embodiment of a clamping anchor according to the invention;
figure 20 shows the clamping anchor of figure 19 as mounted in the profile of a door;
figure 21 shows a section according to line XXI-XXI in figure 20.

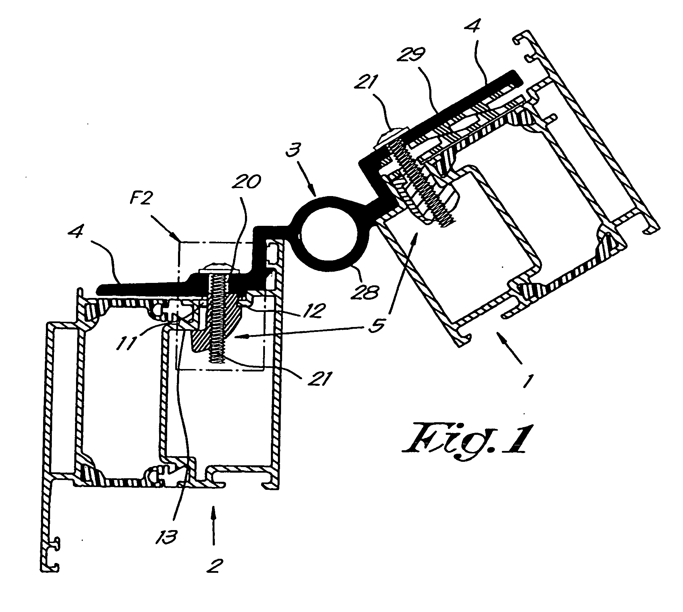

The part of an opened door as represented in figure 1 comprises a hollow profile 1, made of aluminium or the like, of a fixed frame and a hollow profile 2 of an inward opening leaf which are connected to one another by means of a hinge 3 with two hinge leaves 4, one hinge leaf of which is fixed to the profile 1 and the other hinge leaf of which is fixed to the profile 2 by means of clamping anchors 5 according to the invention.

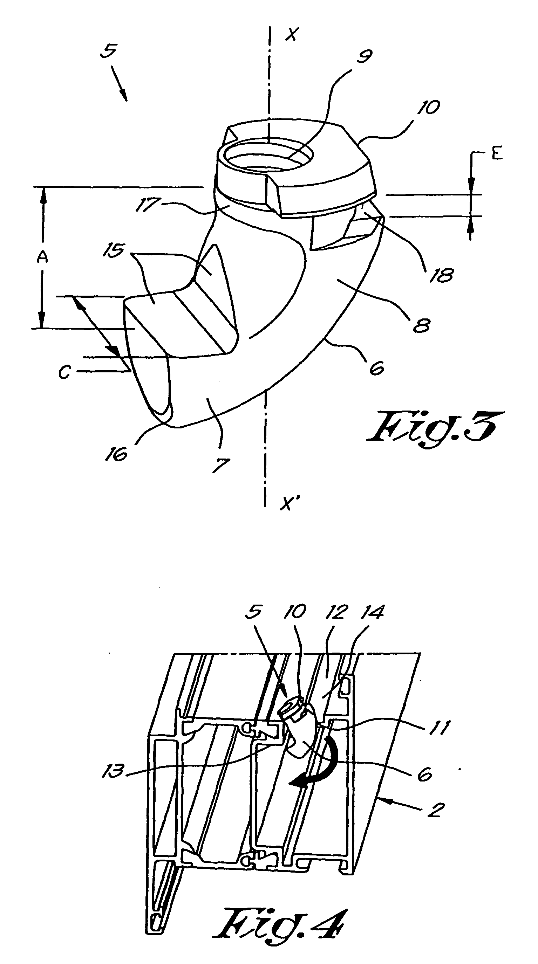

As is represented in greater detail in figure 3, the clamping anchor 5 mainly consists of a hook-shaped or L-shaped body 6 with a first leg 7 and a second leg 8, whose second leg 8 is provided with an inner screw thread 9 extending in the longitudinal direction X-X' of said leg 8 and of a broadened head 10 on the end face of said leg 8.

The clamping anchor 5 has such shape and dimensions that the body 6, starting with the first leg 7, can be put entirely through an opening 11, preferably a round opening, in a wall 12 of the profile 2 up to the thickened head 10 which is such that it cannot pass through the above-mentioned opening 11, and whereby the length A of the second leg 8 is such that, when the body 6 is put in the profile 2 up to the broadened head 10, the clamping anchor 5 can be hooked with the first leg 7 behind a first inner wall surface 13 of the profile 2, as is shown in figure 1 in which the first inner wall surface 13 is situated in a reinforced zone of the profile.

The length A of the second leg 8, in particular the perpendicular distance between the broadened head 10 and the first leg 7, is thereby preferably equal to or somewhat larger than the perpendicular distance B between the above-mentioned first inner wall surface 13 and the outer wall surface 14 of the wall 12 in which the above-mentioned opening 11 has been provided.

In the given example of figure 3, the shape of the exterior angle of the body 6 is a bent, rounded shape which makes it possible for the body 6 of the clamping anchor 5 to be put through the above-mentioned opening 11 in the profile by means of a tilting movement and/or a translation movement as is illustrated in figure 4.

Both legs of the body 6 are made flat on the inside with flat parts 15, and they are rounded on the outside with a cross section having the shape of the segment of a circle 16 on the outside with a diameter C which is somewhat smaller than the diameter D of the above-mentioned opening 11.

The widened head 10 in this case has the shape of a plate extending crosswise to the longitudinal direction X-X' of the second leg 8.

The broadened head 10 has been provided on the far end 17 of the second leg 8 which is narrowed over a certain length E at said far end 17 so as to form a shoulder 18 on the outside of the body 6, which shoulder 18 is designed to form a stop against a second internal wall surface 19 of the profile 2, for example against the internal wall surface 19 of the wall 12 in which the above-mentioned opening 11 has been provided.

The length E of the narrowed far end of the second leg 8, in particular the perpendicular distance between the broadened head 10 and the above-mentioned shoulder 18, is equal to or somewhat larger than the perpendicular distance F between the above-mentioned second inner wall surface 19 and the outer wall surface 14 of the wall 12 in which the above-mentioned opening 11 has been provided.

Optionally, the far end 17 is not narrowed or only over a very limited length E, whereby the far end 17 maintains a cylindrical shape up to the shoulder 18, which makes sure that the far end 17 fits exactly in a round opening 11, and whereby the shoulder 18 forms an additional supporting surface against the hinge leaf 4, resulting in a stabler assembly on the hinge leaf 4.

The clamping anchor is in this case made in one piece.

The use of a clamping anchor 5 according to the invention for fixing a hinge leaf 4 on the wall 12 of a hollow profile 2 is simple and as follows.

First, an opening 11 is drilled in the wall 12 with a drill having a diameter D which is somewhat larger than the above-mentioned diameter C of the legs 7 and 8.

Next, as shown in figure 4, the clamping anchor 5 is put with its first leg 7 in the opening 11 and subsequently tilted until the first leg 7 hooks behind the wall surface 13. The broadened head 10 thereby prevents the clamping anchor 5 from falling in the profile 2.

Then, the hinge plate 4 is put over the clamping anchor 5 on the wall 12, whereby a fixing hole 20 is aligned in the hinge leaf 4 opposite the clamping anchor.

Afterwards, a screw 21 is put through the fixing hole 20, and said screw 21 is tightened in the screw thread 9 of the clamping anchor 5.

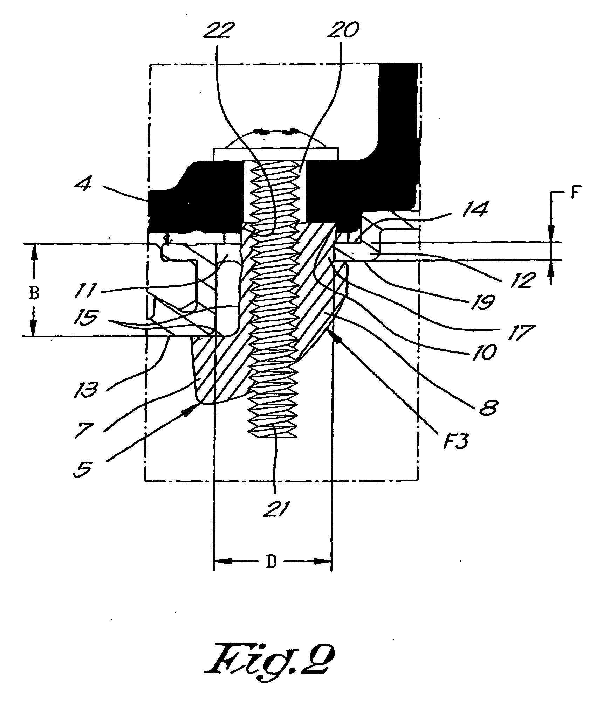

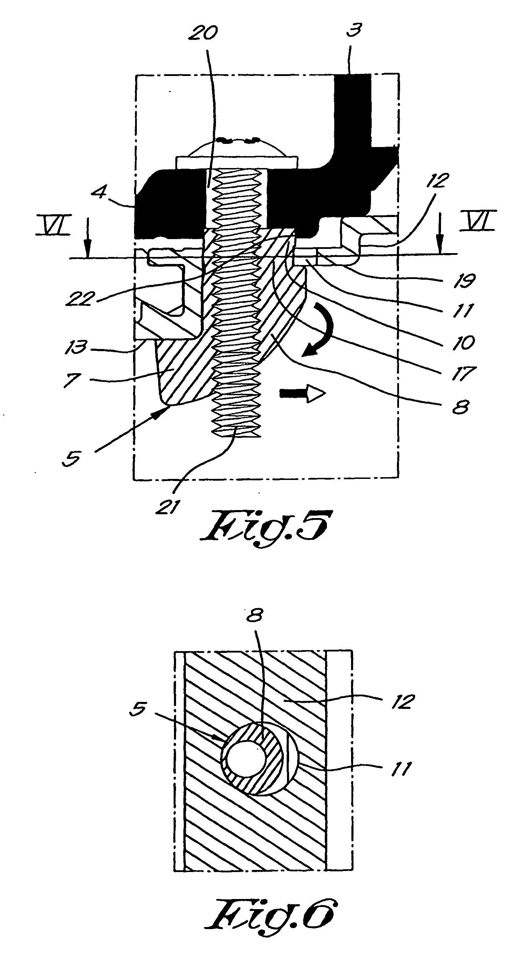

Before tightening the screw 21 entirely, the hinge leaf 4 together with the clamping anchor 5 can be shoved further in the radial direction, as is shown in figures 5 and 6, so as to place the shoulder 18 at least partly under the second inner wall surface 19, as in the situation of figure 2. This is made possible thanks to the narrowed far end 17 which still allows for a certain radial freedom of movement of the clamping anchor 5 in the opening 11, as is clear from figure 6.

Finally, the screw 21 is screwed down tightly, as a result of which the clamping anchor 5 is clamped onto the profile 2, in particular at the first and the second inner wall surface 13, 19 respectively.

Optionally, if the profile 2 is fit for it, the flat part 15 may be provided with a hook-forming elevation at the far end which can hook behind a profile edge and thus prevent any rotation of the clamping anchor while the screw 21 is being tightened.

As these wall surfaces 13 and 19 are situated on either side of the second leg 8, a stable fastening is obtained.

The radial freedom of movement makes it possible for the clamping anchor 5 to be clamped in different positions between the utmost positions of figures 2 and 5, which allows for a certain freedom for the assembly, taking into account the dimensional tolerances of the parts and of the bore holes 11, and in particular to obtain with a minimum number of clamping anchor 5 types as many combinations as possible of different types of profiles 1-2 and of different types of hinges 3.

Preferably, a recess 22 is provided in the contact side of the hinge leaf 4 round the fixing hole 20 in which the broadened head 10 of the clamping anchor 5 can take place, and whereby the shape and dimensions of this recess 22 are preferably such that they prevent any rotation of the clamping anchor 5 round the axis X-X' when tightening the screw 21.

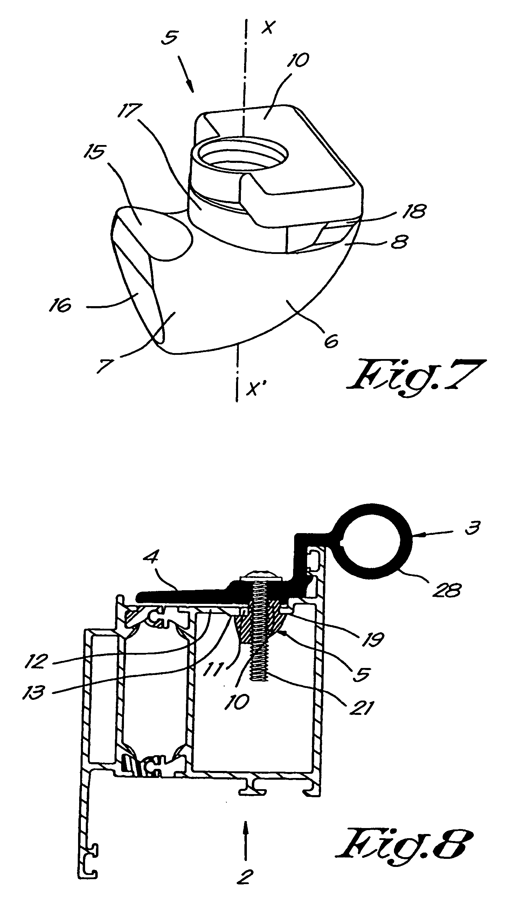

Figure 7 shows a clamping anchor 5 analogous to that in figure 3, whereby the second leg 8 is much shorter this time, however, and this leg 8 is in fact practically restricted to the narrowed far end 17, such that the shoulder 18 and the flat part 15 of the first leg 7 are situated in one and the same plane or almost in the same plane.

This makes the clamping anchor 5 fit to be mounted in a profile whose first and second inner contact wall surfaces 13-19 are situated in the same plane or practically in the same plane, as shown in figure 8, whereby these wall surfaces 13-19 are the inner walls of the wall 12 with the opening 11 in this figure.

It is also clear from said figure that additional stability is obtained when fastening the hinge leaf 4 by providing a protrusion 4' on the hinge leaf 4 which hooks behind a rib of the profile, as a result of which the clamping anchor 5 will have to absorb less forces when the door is opened or closed, since part of these forces will be absorbed via said protrusion 4'.

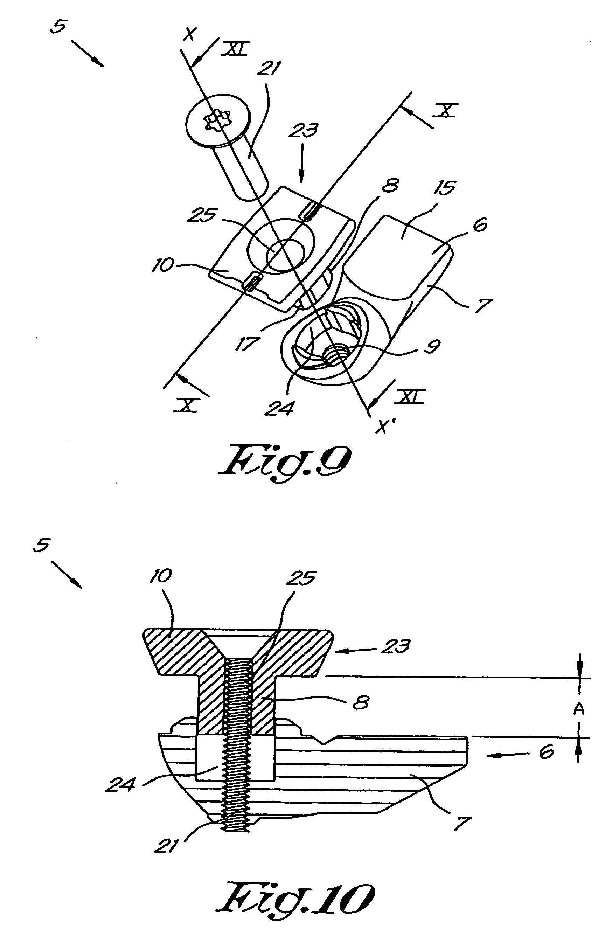

Figures 9 to 11 show a special embodiment of a clamping anchor 5 according to the invention whereby the second leg 8 is telescopically extendible.

To this end, the broadened head 10 and the narrowed far end 17 of the second leg 8 together form a separate part 23 which is slidingly provided in a guide with the narrowed far end 17, which guide extends in the second leg 8 according to the longitudinal direction X-X' of the second leg 8.

The separate part 23 is provided with a passage 25 in the extension of the screw thread 9 of the second leg 8, whereby both parts of the clamping anchor 5 are held together by means of a screw 21.

In order to mount said clamping anchor, both parts of the clamping anchor 5 are assembled and held together by the screw 21.

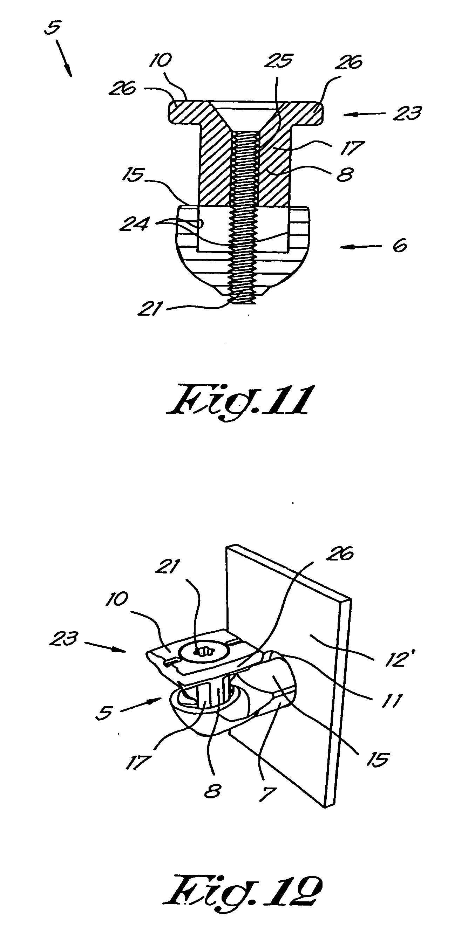

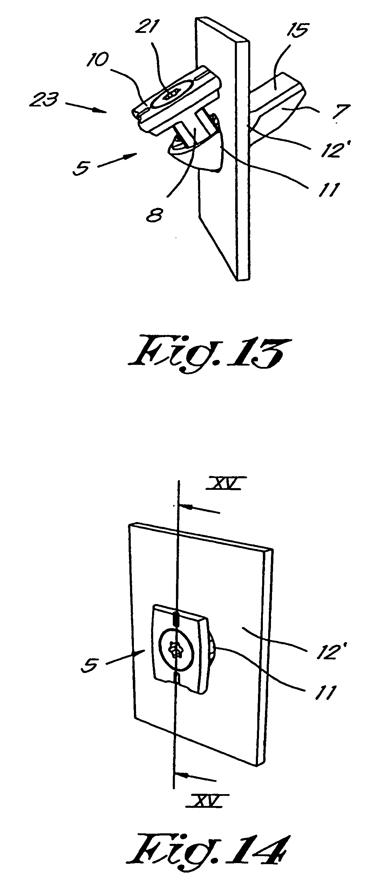

Next, the clamping anchor is put in the opening 11 in the wall 12 and tilted in its position, as is represented by means of successive steps in figures 12 to 14.

The screw 21 can then be tightened, such that the telescopic parts of the iron 5 slide into one another until the second leg 8 makes contact with for example the bottom side of the wall 12'.

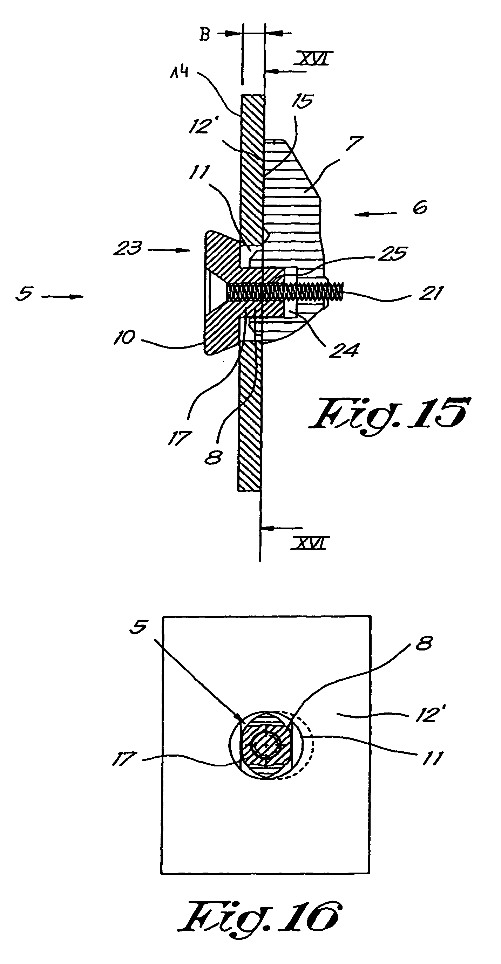

In this phase, the clamping anchor 5 can still freely move in the lateral direction thanks to the play of the narrowed part 17 in the opening 11, as is clear from the section of figure 16.

A major quality of the embodiment of the telescopic embodiment is that the clamping anchor can adapt to different wall thicknesses and that the outer surface 14 of the wall 12' hereby is the reference for the stop, whereby in this case the distance A and the distance B become equal by tightening the screw 21, whereas in the preceding embodiments the distance A is preferably somewhat larger than the distance B.

This is all very important for the fastening of for example a hinge 3, as the fastening in this way is independent of the wall thickness, any tolerances in the wall thickness, the thickness of possible coatings or paints, profile embodiments and the like.

In this specific example, the broadened head 10 is made as a fastening element for the additional fastening of a hinge 3 on a profile 1 or 2, whereby this fastening element is provided with a profiling having a T-shaped cross section with laterally protruding ribs 26, as can be seen in figure 11.

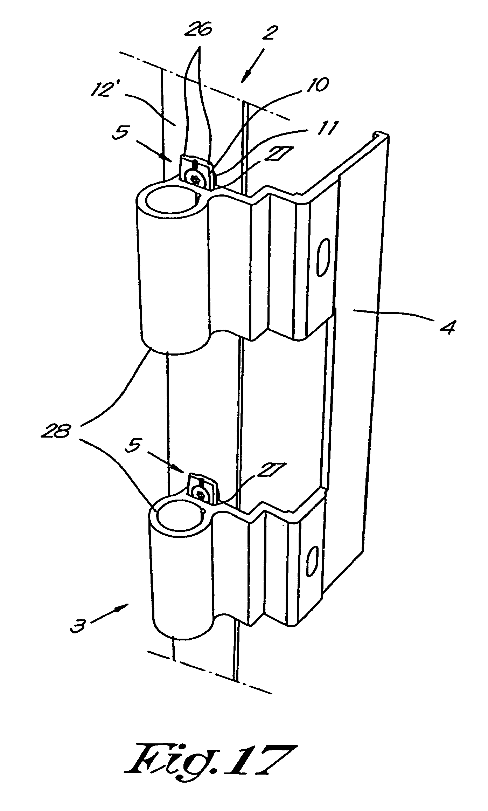

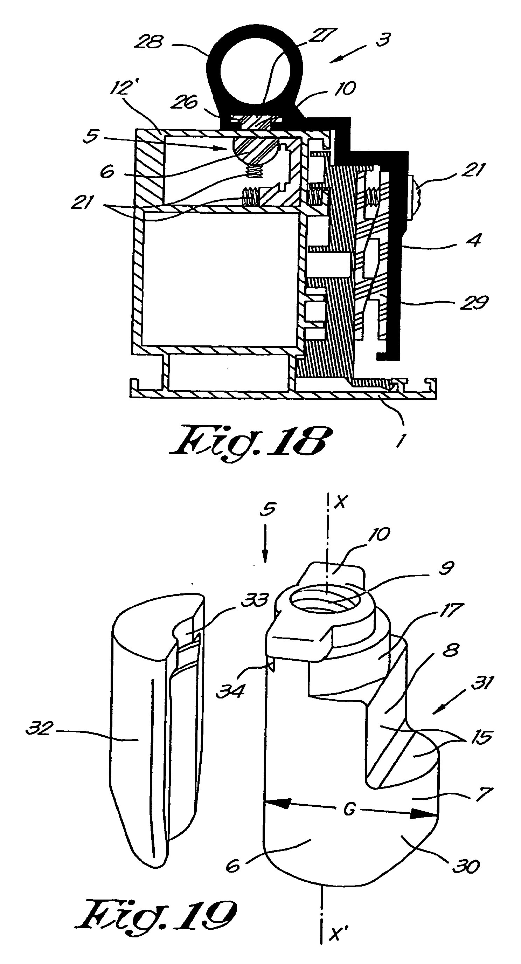

Said fastening element is designed in particular as a sliding piece which can be held in a sliding manner in a guiding groove 27 with a corresponding profiling on the bottom side of the hinge 3, as can be seen in figures 17 and 18.

It is clear that, thanks to this assembly, the hinge 3 can slide in the longitudinal direction of the wall 12 of the profile on which the hinge 3 has been mounted, and it also allows for a certain lateral sliding movement in relation to said direction, be it within the limits of the play of the clamping anchor 5 in the opening 11.

Said fastening is meant as an additional fastening of the hinge in a place where applying a fastening bolt to fasten the hinge is not desirable or possible, and to provide more stability to the fastening.

A possible application thereof is represented for example in figure 18, where a hinge leaf of an offset hinge 3 is fixed to the frame profile 1 of a door.

The hinge loop 28 is in this case situated on the outside of the door frame on an outer wall 12' of the profile 1, whereas the hinge leaf 4 is fixed on the inside of the frame profile 1 by means of a screw 21, for example in a way as described above but not represented in the figure.

The hinge leaf 4 is thereby mounted on the profile 1 by means of a known adjusting mechanism which makes it possible to adjust the distance of the hinge leaf 4 to the profile 1.

During said adjustment, the hinge loop 28 may slide along the outer wall 12, which is not prevented by the clamping anchor since it has a certain play in the opening 11 in the wall 12'.

The clamping anchor 5 in this case lends more stability to the hinge 3 when opening and closing the door, since the overturning moment which then occurs and which tends to draw the hinge loop 28 away from the outer wall 12' will be absorbed by the clamping anchor 5, as a result of which the clamping anchor with the screw 21 on the inside of the profile 1 will be relieved.

Figure 19 shows yet another variant of a clamping anchor 5 according to the invention.

In this case, the L-shaped body 6 is made as a cylindrical body from which has been removed an angle 31 so as to form an L-shaped body and in which has been provided a screw thread 9 extending in the axial direction X-X' of the cylindrical body 30.

The diameter G of the above-mentioned cylindrical body 30 out of which the L-shaped body is shaped, is somewhat smaller than the diameter D of the opening 11 in the wall 12 of the profile 2.

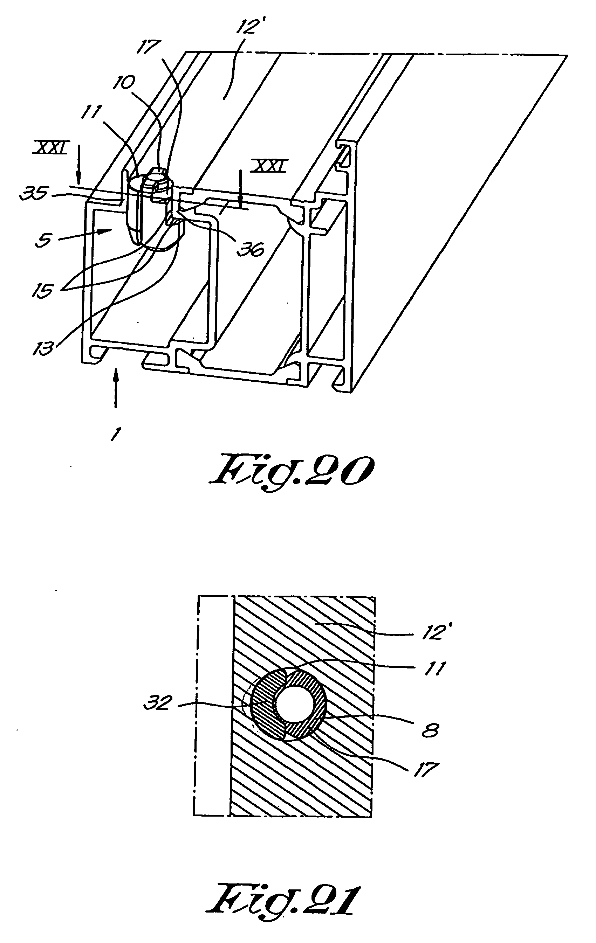

The clamping anchor 5 is additionally provided with a loose attachment 32 to widen the second leg 8 of the L-shaped body 6 after it has been put in the above-mentioned opening 11 in the profile 12, as is shown in figure 20.

The attachment 32 is formed as the segment of a cylindrical bush with an outer diameter which is equal to or practically equal to the diameter G of the cylindrical body 30 out of which the L-shaped body 6 of the clamping anchor 5 is formed.

The attachment 32 is provided with a collar 33 with which it can rest, in the longitudinal direction X-X' of said second leg 8, on a shoulder 34 formed in the second leg 8, whereby said attachment 32 extends in the above-mentioned longitudinal direction X-X' as of or practically as of the broadened head 10.

The narrowed far end 17 of the second leg 8, together with the attachment 32, defines a cylindrical shape at the narrowed far end 17 having a diameter which is equal to or practically equal to the diameter G of the cylindrical body 30 out of which the L-shaped body 6 is formed, as can be seen in the section of figure 21.

Optionally, the attachment 32, just as the second leg 8, may be provided with a broadening which is similar to and which possibly fits onto the broadened head 10 of the second leg 8, as a result of which said attachment 32 cannot fall in the profile 2 either.

This clamping anchor 5 can be applied in situations whereby two parallel internal walls 35 and 36 are provided in the profile 1 which extend crosswise to the wall 12 onto which the hinge leaf 4 must be attached.

Such a situation is found in profiles, as illustrated in figure 20, which are in fact the profile 1 represented in figure 1.

In view of the assembly, an opening 11 is first drilled between the two walls 35 and 36.

Subsequently, the cylindrical body 30 is put in the opening 11 up to the broadened head 10, after which it is laterally moved in the opening 11 in the direction of the wall 36 so as to hook the first leg 7 under the first internal wall surface 13, whereby as a result thereof, room is also made in the opening 11 to shove the attachment 32 in the opening 11 to thus find a counter support on an opposite wall 35 in order to prevent the first leg 7 from tilting away from beneath the wall surface 13.

Thus, the situation from figure 20 is created, and the hinge leaf 4 can be subsequently fixed to the wall 12 by means of a screw 21 as represented in figure 1, whereby an adjusting mechanism 29 is applied in this case as well.

It is clear that in all the above-described embodiments, the clamping anchor 5 can be mounted as of the outside of a profile 1-2 in a round passage 11 in the wall 12 of a profile 1-2, and that said clamping anchors 5 can also be dismounted as of the outside of the profile 1-2 in which they have been mounted, and that they can be re-used after having been dismounted.

## Claims

1. Clamping anchor for fixing a fitting on the hollow profile (1-2) of a window or door, **characterised in that** it mainly consists of a hook-shaped or L-shaped body (6) with a first leg (7) and a second leg (8), of which the second leg (8) is provided with an internal screw thread (9) extending in the longitudinal direction (X-X') of said second leg (8) and with a broadened head (10) on the end face of said second leg (8), whereby the clamping anchor (5) has such a shape and dimensions that the body (6), starting with the first leg (7), can be put entirely through a round opening (11) in a wall (12) of the profile (1-2) up to the broadened head (10) which is such that it cannot pass through the above-mentioned opening (11), and whereby the length (A) of the second leg (8) is such that when the body (6) is put in the profile (1-2) up to the broadened head (10), the clamping anchor (5) can be hooked with the first leg (7) behind a first inner wall surface (13) of the profile (1-2) and can then be clamped with the latter thanks to the tensile force of a bolt (21) which is screwed in the above-mentioned screw thread (9).

2. Clamping anchor according to claim 1, **characterised in that** the length (A) of the second leg (8), in particular the perpendicular distance between the broadened head (10) and the first leg (7), is equal to or somewhat larger than the perpendicular distance (B) between the above-mentioned first inner wall surface (13) and the outer wall surface (14) of the wall (12) in which the above-mentioned opening (11) has been provided.

3. Clamping anchor according to claim 1 or 2, **characterised in that** the legs (7-8) of the hook-shaped or L-shaped body (6) are rounded on their outsides and have a section there in the shape of the segment of a circle (16) with a diameter (C) which is somewhat smaller than the diameter (D) of the above-mentioned opening (11), and **in that** the exterior corner of the hook-shaped or L-shaped body (6) has a bent, rounded shape, such that the body (6) of the clamping anchor (5) can be put through the above-mentioned opening (11) into the profile (1-2) by means of a tilting movement and/or a translation movement.

4. Clamping anchor according to any one of the preceding claims, **characterised in that** the legs (7-8) of the hook-shaped or L-shaped body (6) are made flat on the inside with flat parts (15), possibly provided with a hook-forming elevation.

5. Clamping anchor according to any one of the preceding claims, **characterised in that** the broadened head (10) has the shape of a plate extending crosswise to the longitudinal direction (X-X') of the second leg (8), and **in that** the second leg (8) has been narrowed over a certain length (E) which is equal to or somewhat larger than the perpendicular distance (F) between the above-mentioned second inner wall surface (19) and the outer wall surface (14) of the wall (12) so as to form a shoulder (18) on the outside of the hook-shaped or L-shaped body (6), which shoulder (18) is intended to form a stop against a second internal wall surface (19) of the profile (1-2), for example against the internal wall surface of the wall (12) in which the above-mentioned opening (11) has been provided.

6. Clamping anchor according to any one of claims 1 to 4, **characterised in that** the broadened head (10) has the shape of a plate extending crosswise to the longitudinal direction (X-X') of the second leg (8), and **in that** the second leg (8) has been narrowed over a certain length (E) which is equal or approximately equal to zero, so as to form a shoulder (18) on the outside of the hook-shaped or L-shaped body (6), which shoulder (18) is intended to form a stop against the fitting (4) after the assembly, and **in that** the far end (17) fills the opening (11) in a fitting manner.

7. Clamping anchor according to any one of the preceding claims, **characterised in that** it is made in one piece.

8. Clamping anchor according to any one of claims 1 to 8, **characterised in that** the second leg (8) is telescopically extendible.

9. Clamping anchor according to claim 8, **characterised in that** the broadened head (10) together with the narrowed far end (17) of the second leg (8) form a separate part (23) which is provided slidingly in a guide (24) with the narrowed far end (17), which guide (24) extends in the second leg (8) according to the longitudinal direction (X-X') of the second leg (8), which is provided with a passage in the extension of the screw thread (9) of the second leg (8) and which is held together with the second leg (8) by means of a screw (21).

10. Clamping anchor according to claim 9, **characterised in that** the broadened head (10) is made as a fastening element for fixing a part (4) of a fitting on a profile (1-2), whereby this fastening element is made as a sliding piece which can be held slidingly in a guiding groove (27) of the part (4) concerned of the fitting so as to fasten it.

11. Clamping anchor according to claim 1 or 2, **characterised in that** the L-shaped body (6) is made as a cylindrical body (30) from which an corner (31) has been removed so as to form an L-shaped body (6) and in which the screw thread (9) has been provided which extends in the axial direction (X-X') of the cylindrical body (30).

12. Clamping anchor according to claim 11, **characterised in that** it is additionally provided with a loose attachment (32) so as to widen the second leg (8) of the L-shaped body (6) after it has been put in the above-mentioned opening (11) in the profile (1-2).

13. Clamping anchor according to claim 12, **characterised in that** the attachment (32) is formed as a segment of a cylindrical bush with an outer diameter which is equal to or practically equal to the diameter (G) of the cylindrical body (30) out of which the L-shaped body (6) of the clamping anchor (5) is formed.

14. Clamping anchor according to claim 12 or 13, **characterised in that** the attachment (32) is provided with a collar (33) with which it can rest on a shoulder (34) formed in the second leg (8), in the longitudinal direction (X-X') of said second leg (8), whereby said attachment (32) extends in the above-mentioned longitudinal direction (X-X') from almost from the broadened head (10).

15. Clamping anchor according to any one of the preceding claims, **characterised in that** it can be mounted from the outside of a profile (1-2) in a round passage (11) in a wall (12) of the profile (1-2), as well as dismounted , and **in that** it can be re-used after having been dismounted.

## Patentansprüche

1. Klemmanker zur Befestigung eines Beschlags an einem Hohlprofil (1-2) eines Fensters oder einer Tür, **dadurch gekennzeichnet, dass** er im Wesentlichen aus einem hakenförmigen oder L-förmigen Körper (6) mit einem ersten Schenkel (7) und einem zweiten Schenkel (8) besteht, wovon der zweite Schenkel (8) mit einem Innengewinde (9), das sich in der Längsrichtung (X-X') besagten zweiten Schenkels (8) erstreckt, und mit einem verbreiterten Kopf (10) an der Stirnseite besagten zweiten Schenkels (8) versehen ist, wobei der Klemmanker (5) eine solche Form und Abmessungen aufweist, dass der Körper (6), beginnend mit dem ersten Schenkel (7), vollständig durch eine runde Öffnung (11) in einer Wand (12) des Profils (1-2) gesteckt werden kann, bis zu dem verbreiterten Kopf (10), der derart ist, dass er nicht durch die vorgenannte Öffnung (11) passieren kann, und wobei die Länge (A) des zweiten Schenkels (8) derart ist, dass, wenn der Körper (6) bis an den verbreiterten Kopf (10) in das Profil (1-2) gesteckt ist, der Klemmanker (5) mit dem ersten Schenkel (7) hinter eine erste innere Wandoberfläche (13) des Profils (1-2) gehakt werden kann und dann mittels der Spannkraft eines Bolzens (21), der in das vorgenannte Schraubengewinde (9) eingeschraubt wird, damit festgeklemmt werden kann.

2. Klemmanker nach Anspruch 1, **dadurch gekennzeichnet, dass** die Länge (A) des zweiten Schenkels (8), spezieller der senkrechte Abstand zwischen dem verbreiterten Kopf (10) und dem ersten Schenkel (7), gleich dem oder etwas größer ist als der senkrechte Abstand (B) zwischen der vorgenannten ersten inneren Wandoberfläche (13) und der äußeren Wandoberfläche (14) der Wand (12), worin die vorgenannte Öffnung (11) angebracht worden ist.

3. Klemmanker nach Anspruch 1 oder 2, **dadurch gekennzeichnet, dass** die Schenkel (7-8) des hakenförmigen oder L-förmigen Körpers (6) an ihren Außenseiten abgerundet sind und dort einen Querschnitt in Form eines Kreissegments (16) mit einem Durchmesser (C), der etwas kleiner als der Durchmesser (D) der vorgenannten Öffnung (11) ist, aufweisen, und dass die Außenecke des hakenförmigen oder L-förmigen Körpers (6) eine gebogene, abgerundete Form besitzt, sodass der Körper (6) des Klemmankers (5) mittels einer Kippbewegung und/oder Translationsbewegung durch die vorgenannte Öffnung (11) in das Profil (1-2) gesteckt werden kann.

4. Klemmanker nach einem der vorgenannten Ansprüche, **dadurch gekennzeichnet, dass** die Schenkel (7-8) des hakenförmigen oder L-förmigen Körpers (6) an der Innenseite flach ausgeführt sind, mit flachen Teilen (15), eventuell mit einer hakenförmigen Erhöhung versehen.

5. Klemmanker nach einem der vorgenannten Ansprüche, **dadurch gekennzeichnet, dass** der verbreiterte Kopf (10) die Form einer Platte aufweist, die sich quer zur Längsrichtung (X-X') des zweiten Schenkels (8) erstreckt, und dass der zweite Schenkel (8) über eine gewisse Länge (E) schmaler ausgeführt ist, die gleich dem oder etwas größer als der senkrechte Abstand (F) zwischen der vorgenannten zweiten inneren Wandoberfläche (19) und der äußeren Wandoberfläche (14) der Wand (12) ist, um eine Schulter (18) an der Außenseite des hakenförmigen oder L-förmigen Körpers (6) zu bilden, welche Schulter (18) dazu bestimmt ist, einen Anschlag gegen eine zweite innere Wandoberfläche (19) des Profils (1-2) zu bilden, beispielsweise gegen die innere Wandoberfläche der Wand (12), worin die vorgenannte Öffnung (11) angebracht worden ist.

6. Klemmanker nach einem der Ansprüche 1 bis 4, **dadurch gekennzeichnet, dass** der verbreiterte Kopf (10) die Form einer Platte aufweist, die sich quer zur Längsrichtung (X-X') des zweiten Schenkels (8) erstreckt, und dass der zweite Schenkel (8) über ein gewisse Länge (E) schmaler ausgeführt ist, die gleich oder nahezu gleich Null ist, um eine Schulter (18) an der Außenseite des hakenförmigen oder L-förmigen Körpers (6) zu bilden, welche Schulter (18) dazu bestimmt ist, nach der Montage einen Anschlag gegen den Beschlag (4) zu bilden, und dass das Ende (17) die Öffnung (11) auf passende Weise füllt.

7. Klemmanker nach einem der vorgenannten Ansprüche, **dadurch gekennzeichnet, dass** er einstückig ausgeführt ist.

8. Klemmanker nach einem der Ansprüche 1 bis 8, **dadurch gekennzeichnet, dass** der zweite Schenkel (8) teleskopartig verlängerbar ist.

9. Klemmanker nach Anspruch 8, **dadurch gekennzeichnet, dass** der verbreiterte Kopf (10) zusammen mit dem verschmälerten Ende (17) des zweiten Schenkels (8) ein separates Teil (23) bildet, das mit dem verschmälerten Ende (17) verschiebbar in einer Führung (24) angebracht ist, welche Führung (24) sich in dem zweiten Schenkel (8) gemäß der Längsrichtung (X-X') des zweiten Schenkels (8) erstreckt, der mit einem Durchgang in der Verlängerung des Schraubengewindes (9) des zweiten Schenkels (8) versehen ist und der mittels einer Schraube (21) mit dem zweiten Schenkel (8) zusammengehalten wird.

10. Klemmanker nach Anspruch 9, **dadurch gekennzeichnet, dass** der verbreiterte Kopf (10) als Befestigungselement zur Befestigung eines Teils (4) eines Beschlags an einem Profil (1-2) ausgeführt ist, wobei dieses Befestigungselement als Gleitstück ausgeführt ist, das verschiebbar in einer Führungsnut (27) des betreffenden Teils (4) des Beschlags gehalten werden kann, um es zu befestigen.

11. Klemmanker nach Anspruch 1 oder 2, **dadurch gekennzeichnet, dass** der L-förmige Körper (6) als ein zylindrischer Körper (30) ausgeführt ist, aus dem eine Ecke (31) entfernt worden ist, um einen L-förmigen Körper (6) zu bilden, und worin das Schraubengewinde (9) angebracht worden ist, das sich in der axialen Richtung (X-X') des zylindrischen Körpers (30) erstreckt.

12. Klemmanker nach Anspruch 11, **dadurch gekennzeichnet, dass** er zusätzlich mit einem losen Ansatzstück (32) versehen ist, um den zweiten Schenkels (8) des L-förmigen Körpers (6), nachdem dieser in die vorgenannte Öffnung (11) in dem Profil (1-2) gesteckt worden ist, zu verbreitern.

13. Klemmanker nach Anspruch 12, **dadurch gekennzeichnet, dass** das Ansatzstück (32) als ein Segment einer zylindrischen Buchse mit einem Außendurchmesser geformt ist, der gleich oder praktisch gleich dem Durchmesser (G) des zylindrischen Körpers (30) ist, aus dem der L-förmige Körper (6) des Klemmankers (5) gebildet ist.

14. Klemmanker nach Anspruch 12 oder 13, **dadurch gekennzeichnet, dass** das Ansatzstück (32) mit einem Kragen (33) versehen ist, womit es in der Längsrichtung (X-X') besagten zweiten Schenkels (8) auf einer in dem zweiten Schenkel (8) gebildeten Schulter (34) stützen kann, wobei besagtes Ansatzstück (32) sich in der vorgenannten Längsrichtung (X-X') ab oder nahezu ab dem verbreiterten Kopf (10) erstreckt.

15. Klemmanker nach einem der vorgenannten Ansprüche, **dadurch gekennzeichnet, dass** er von der Außenseite eines Profils (1-2) in einem runden Durchgang (11) in einer Wand (12) des Profils (1-2) montiert sowie demontiert werden kann und dass er nach Demontage wiederverwendet werden kann.

## Revendications

1. Bride de serrage par ancrage pour fixer un accessoire sur le profilé creux (1-2) d'une fenêtre ou d'une porte, **caractérisée en ce qu'**elle est constituée à titre principal d'un corps en forme de crochet ou en forme de L (6) comprenant une première branche (7) et une deuxième branche (8), la deuxième branche (8) étant munie d'un filet de vis interne (9) qui s'étend dans la direction longitudinale (X-X') de ladite deuxième branche (8) et comprenant une tête élargie (10) sur la face terminale de ladite deuxième branche (8), la bride de serrage par ancrage (5) possédant une configuration et des dimensions telles que le corps (6), en partant de la première branche (7), peut venir s'insérer complètement dans une ouverture arrondie (11) dans une paroi (12) du profilé (1-2) jusqu'à la tête élargie (10) qui est conçue de telle sorte qu'elle ne peut pas traverser l'ouverture susmentionnée (11), et par laquelle la longueur (A) de la deuxième branche (8) est telle que, lorsque le corps (6) est inséré dans le profilé (12) jusqu'à la tête élargie (10), la bride de serrage par ancrage (5) peut venir s'accrocher avec la première branche (7) derrière une première surface de paroi interne (13) du profilé (1-2) et peut être serrée avec cette dernière grâce à la force de traction exercée par un boulon (21) qui est vissé dans le filet de vis (9) susmentionné.

2. Bride de serrage par ancrage selon la revendication 1, **caractérisée en ce que** la longueur (A) de la deuxième branche (8), en particulier la distance perpendiculaire entre la tête élargie (10) et la première branche (7), est égale ou légèrement supérieure à la distance perpendiculaire (B) entre la première surface de paroi interne susmentionnée (13) et la surface de paroi externe (14) de la paroi (12) dans laquelle on prévoit l'ouverture susmentionnée (11).

3. Bride de serrage par ancrage selon la revendication 1 ou 2, **caractérisée en ce que** les branches (7-8) du corps en forme de crochet ou en forme de L (6) sont arrondies sur leurs côtés externes et possèdent une section à cet endroit en forme de segment de cercle (16) dont le diamètre (C) est légèrement inférieur au diamètre (D) de l'ouverture susmentionnée (11), et **en ce que** le coin externe du corps en forme de crochet ou en forme de L (6) possède une configuration courbe arrondie de telle sorte que le corps (6) de la bride de serrage par ancrage (5) peut traverser l'ouverture susmentionnée (11) pour venir s'insérer dans le profilé (1-2) au moyen d'un mouvement de basculement et/ou d'un mouvement de translation.

4. Bride de serrage par ancrage selon l'une quelconque des revendications précédentes, **caractérisée en ce que** les branches (7-8) du corps en forme de crochet ou en forme de L (6) prennent une forme plate sur leur côté interne grâce à des parties plates (15), le cas échéant munies d'une élévation en forme de crochet.

5. Bride de serrage par ancrage selon l'une quelconque des revendications précédentes, **caractérisée en ce que** la tête élargie (10) possède la configuration d'une plaque s'étendant en direction transversale par rapport à la direction longitudinale (X-X') de la deuxième branche (8), et **en ce que** la deuxième branche (8) est rétrécie sur une certaine longueur (E) qui est égale ou légèrement supérieure à la distance perpendiculaire (F) entre la deuxième surface de paroi interne susmentionnée (19) et la surface de paroi externe (14) de la paroi (12), de façon à former un épaulement (18) sur le côté externe du corps en forme de crochet ou en forme de L (6), ledit épaulement (18) étant destiné à former un arrêt contre une deuxième surface de paroi interne (19) du profilé (1-2), par exemple contre la surface de paroi interne de la paroi (12) dans laquelle on prévoit l'ouverture susmentionnée (11).

6. Bride de serrage par ancrage selon l'une quelconque des revendications 1 à 4, **caractérisée en ce que** la tête élargie (10) possède la configuration d'une plaque s'étendant en direction transversale par rapport à la direction longitudinale (X-X') de la deuxième branche (8), et **en ce que** la deuxième branche (8) est rétrécie sur une certaine longueur (E) qui est égale ou approximativement égale à zéro, de façon à former un épaulement (18) sur le côté externe du corps en forme de crochet ou en forme de L (6), ledit épaulement (18) étant destiné à former un arrêt contre l'accessoire (4) après le montage, et **en ce que** l'extrémité éloignée (17) remplit l'ouverture (11) par insertion ou emboîtement.

7. Bride de serrage par ancrage selon l'une quelconque des revendications précédentes, **caractérisée en ce qu'**elle est réalisée en une seule pièce.

8. Bride de serrage par ancrage selon l'une quelconque des revendications 1 à 7, **caractérisée en ce que** la deuxième branche (8) peut s'étendre à la manière d'un télescope.

9. Bride de serrage par ancrage selon la revendication 8, **caractérisée en ce que** la tête élargie (10), conjointement avec l'extrémité éloignée rétrécie (17) de la deuxième branche (8), forment un élément séparé (23) qui est prévu en coulissement dans un guide (24) avec l'extrémité éloignée rétrécie (17), ledit guide (24) s'étendant dans la deuxième branche (8) conformément à la direction longitudinale (X-X') de la deuxième branche (8), étant muni d'un passage dans le prolongement du filet de vis (9) de la deuxième branche (8) et étant maintenu ensemble avec la deuxième branche (8) au moyen d'une vis (21).

10. Bride de serrage par ancrage selon la revendication 9, **caractérisée en ce que** la tête élargie (10) est réalisée sous la forme d'un élément de fixation pour fixer un élément (4) d'un accessoire sur un profilé (1-2), cet élément de fixation étant réalisé sous la forme d'une pièce coulissante qui peut être maintenue en coulissement dans une rainure de guidage (27) de l'élément (4) concerné de l'accessoire de façon à le fixer.

11. Bride de serrage par ancrage selon la revendication 1 ou 2, **caractérisée en ce que** le corps en forme de L (6) est réalisé sous la forme d'un corps cylindrique (30) dont un coin (31) a été retiré de façon à former un corps en forme de L (6) et dans lequel on prévoit un filet de vis (9) qui s'étend dans la direction axiale (X-X') du corps cylindrique 30.

12. Bride de serrage par ancrage selon la revendication 11, **caractérisée en ce qu'**elle est munie en outre d'une fixation lâche (32) de façon à élargir la deuxième branche (8) du corps en forme de L (6) après son insertion dans l'ouverture susmentionnée (11) dans le profilé (1-2).

13. Bride de serrage par ancrage selon la revendication 12, **caractérisée en ce que** la fixation (32) est réalisée sous la forme d'un segment d'une douille cylindrique dont le diamètre externe est égal ou pratiquement égal au diamètre (G) du corps cylindrique (30) à partir duquel on réalise le corps en forme de L (6) de la bride de serrage par ancrage.

14. Bride de serrage par ancrage selon la revendication 12 ou 13, **caractérisée en ce que** la fixation (32) est munie d'une bague (33) avec laquelle elle peut venir s'appuyer sur un épaulement (34) formé dans la deuxième branche (8), dans la direction longitudinale (X-X') de ladite deuxième branche (8), ladite fixation (32) s'étendant dans la direction longitudinale susmentionnée (X-X') à partir pratiquement de la tête élargie (10).

15. Bride de serrage par ancrage selon l'une quelconque des revendications précédentes, **caractérisée en ce qu'**elle peut être montée à partir de l'extérieur d'un profilé (1-2) dans un passage arrondi (11) dans une paroi (12) du profilé (1-2), et également être démontée, et **en ce qu'**elle peut être réutilisée après avoir été démontée.
